# EUROPÄISCHE PATENTSCHRIFT

(11) **EP 2 239 174 B1**
(45) Veröffentlichungstag und Bekanntmachung des Hinweises auf die Patenterteilung: **02.01.2013**
(21) Anmeldenummer: 10158970.3
(22) Anmeldetag: 01.04.2010
(51) Int. Cl.: B60T 15/02, F16K 31/06

(54) **Bistabilventil mit elektromotorischer Betätigung**
Bistable valve powered by an electric motor
Valve bistable dotée d'un actionnement électromotorisé

(30) Priorität: 08.04.2009 DE 102009016981
(43) Veröffentlichungstag der Anmeldung: 13.10.2010
(73) Patentinhaber: KNORR-BREMSE Systeme für Nutzfahrzeuge GmbH, 80809 München (DE)
(72) Erfinder: Stöhr, Markus, 70567 Stuttgart (DE); Leinung, Andreas, 81377 München (DE); Wyen, Stefan, 80837 München (DE)
(74) Vertreter: Schönmann, Kurt

(56) Entgegenhaltungen:
- WO-A1-98/13634
- DE-A1- 10 336 611
- DE-A1-102008 015 249
- JP-A- 8 226 564
- US-A1- 2003 006 389

## Beschreibung

Die Erfindung geht aus von einem elektrisch betätigten Bistabilventil mit einer bistabilen Schaltfunktion mit zwei Schaltzuständen, beinhaltend wenigstens ein mit wenigstens einem Ventilsitz zusammenwirkendes Ventilglied, gemäß dem Oberbegriff von Anspruch 1.

Ein solches elektrisch betätigtes bistabiles Ventil kann zwei stabile Zustände einnehmen, wobei es im Falle eines Stromausfalls den momentan eingestellten Zustand beibehält und keine bevorzugte Schaltstellung einnimmt, wie etwa bekannte, mit einer Rückstellfeder versehene Magnetventile, welche bei unbestromtem Elektromagneten durch die Kraft der Rückstellfeder in eine bestimmte Schaltstellung gedrängt werden.

Ein Bistabilventil ist beispielsweise aus der DE 103 36 611 A1 bekannt und wird in einem Feststellbremsmodul einer elektro-pneumatischen Bremseinrichtung für Nutzfahrzeuge eingesetzt, welches Federspeicherbremszylinder als Bremszuspanneinrichtungen für die Halte- oder Feststellbremse heranzieht. Zur Steuerung des Drucks in den Federspeicherbremszylindern ist ein Relaisventil vorgesehen, mit welchem die Druckzufuhr von einem Druckluftvorrat zu den Federspeicherbremszylindern gesteuert wird. Die Steuerung des Relaisventil erfolgt dabei unter anderem durch ein elektromagnetbetätigtes Bistabilventil, d.h., dass das Bistabilventil durch Bestromung mittels einer elektronischen Steuereinrichtung betätigten ersten Elektromagneten in ein erste Schaltstellung und durch Bestromung eines weiteren Elektromagneten in eine zweite Schaltstellung gebracht wird. Die Elektromagneten werden zur Vermeidung undefinierter Zustände nicht gleichzeitig betätigt.

Nachteilig bei einer Betätigung eines elektrisch betätigbaren Bistabilventils ist jedoch, dass die Elektromagneten durch hohe Temperaturen oder starke mechanische Belastungen wie Erschütterungen ihre Magnetkraft ganz oder teilweise verlieren können.

Ein gattungsgemäßes Bistabilventil wird in US 2003/0006389 A beschrieben, welches ein mit einem Ventilsitz zusammenwirkendes Ventilglied beinhaltet. Die WO 98/13634 A beschreibt ein elektromotorisch angetriebenes Ventil für eine regelbare hydraulische Fahrzeugbremsanlage

Der vorliegenden Erfindung liegt daher die Aufgabe zugrunde, ein elektrisch betätigtes Bistabilventil der eingangs erwähnten Art derart fortzubilden, dass es bei geringem Aufwand eine erweiterte Funktionalität sowie eine hohe Dynamik aufweist.

Diese Aufgabe wird erfindungsgemäß durch die Merkmale von Anspruch 1 gelöst.

### Offenbarung der Erfindung

Die Erfindung geht davon aus, dass die elektrische Betätigung wenigstens einen Elektromotor mit einem Rotor und einem Stator umfasst, wobei der Rotor ein Drehelement eines Getriebes zur Wandelung der Drehbewegung des Rotors in eine Linearbewegung eines Linearelements des Getriebes treibt und das Linearelement mit dem wenigstens einen Ventilglied zusammenwirkt, um die Schaltzustände herzustellen.

Diese Art der Betätigung eines bistabilen Ventils hat den Vorteil, dass der zuletzt eingestellte Zustand ohne eine weitere Bestromung des Elektromotors bestehen bleibt, zumal das Getriebe, beispielsweise ein selbsthemmender Mutter-Spindel-Trieb dazu beiträgt, dass dieser Zustand auch bei Schwingungs- oder Stoßbelastung des Bistabilventils nicht verändert wird stabil bleibt.

Weiterhin bedarf es bei einer solchen elektromotorischen Ansteuerung eines Bistabilventils keiner besonderen Positioniergenauigkeit, da es ausreichend ist, wenn der Elektromotor in beiden Betätigungsrichtungen jeweils einen Grenzdrehwinkel überschreiten kann, bei welchem sich ein Schaltzustand einstellen kann.

Erfindungsgemäß betätigt das Linearelement des Getriebes ein Doppelsitzventil derart, dass beide Schaltzustände in einer einzigen linearen Betätigungsrichtung eingenommen werden.

Durch die in den Unteransprüchen aufgeführten Maßnahmen sind vorteilhafte Weiterbildungen und Verbesserungen der in den unabhängigen Ansprüchen angegebenen Erfindung möglich.

Gemäß einer bevorzugten Ausführungsform weist der Elektromotor eine mehrsträngige, von einer elektronischen Steuerung gesteuerte Wicklung auf, wobei sich abhängig von der Ansteuerung der Wicklung durch die elektronische Steuerung Drehrichtung und Drehwinkel eines Rotors des Elektromotors in Bezug zum Stator festlegbar sind.

Solche Elektromotoren sind beispielsweise bürstenlose Gleichstrommotoren wie Schrittmotoren oder elektronisch kommutierte Elektromotoren. Gegenüber Bürstenmotoren, bei welchen ein Kurzschluss dazu führen würde, dass das Bistabilventil stets von einer in die andere Schaltstellung umgeschaltet wird, haben solche Elektromotoren den Vorteil, dass ihre elektronische Steuerung sie bei einem unbeabsichtigten Kurzschluss lediglich einen Winkelschritt ausführen lässt und sie dadurch das Bistabilventil nicht bis in den anderen Schaltzustand umschalten. Dies ist insbesondere bei Verwendung von Bistabilventilen mit solchen Elektromotoren in Feststellbremseinrichtungen von Fahrzeugen von Vorteil, wenn bei abgestelltem Fahrzeug und zugespannter Feststellbremse ein Kurzschluss eine unbeabsichtigte Aktivierung des Elektromotors zur Folge hat, diese Aktivierung aber noch kein Umschalten des Bistabilventils in einen Schaltzustand bewirkt, in dem die Feststellbremse gelöst ist. Durch diese Maßnahme wird daher die Sicherheit der Feststellbremseinrichtung erhöht.

Gemäß einer Weiterbildung umfasst der Rotor und/oder der Stator des Elektromotors wenigstens einen Permanentmagneten zur Erzeugung eines Halte- oder Rastmoments im stromlosen Zustand, insbesondere der Rotor den wenigstens einen Permanentmagneten und der Stator die mehrsträngige Wicklung. Insbesondere weist der Permanentmagnet des Rotors abwechselnd einen Nordpol und einen Südpol auf. Das durch den wenigstens einen Permanentmagneten erzeugte Rastmoment oder Polrastmoment, das auch ohne Bestromung wirkt, verstärkt dann das durch das selbsthemmende Getriebe, vorzugsweise durch einen selbsthemmenden Mutter-Spindel-Trieb reibschlüssig erzeugte Haltemoment in weiterem Maße, so dass die Stabilität der zuletzt eingenommenen Schaltstellung noch weiter steigt. Im Hinblick auf den Einsatz eines solchermaßen fortgebildeten Bistabilventils in Feststellbremseinrichtungen von Fahrzeugen kann dadurch die Sicherheit noch weiter erhöht werden.

Ein Elektromotor mit einer solchen auf der Basis eines Permanentmagneten erzeugten Rastmoments ist beispielsweise ein rein permanent erregter Schrittmotor oder ein Hybridmotor, welcher eine Kombination aus einem Reluktanzschrittmotor und einem Permanentschrittmotor ist. Demgegenüber wird bevorzugt kein reiner Reluktanzschrittmotor verwendet, da ein solcher keinen Permanentmagneten aufweist und demzufolge auch kein Rastmoment erzeugen kann.

Beispielsweise bei Stromausfällen während einer Betätigung oder Aktivierung des Elektromotors können sich schleichende Positionsverluste einstellen, die über einen längeren Zeitraum zu Fehlpositionierungen des wenigstens einen Ventilglieds und damit zu Fehlschaltungen führen können. Deshalb ist gemäß einer Weiterbildung ein einer Nulllage oder Referenzposition zugeordneter Anschlag für das Drehelement oder das Linearelement des Getriebes vorgesehen, gegen welchen der Elektromotor gefahren werden kann. Ein dadurch bedingter Anstieg des Motormoments bzw. durch die Blockade bildet dann ein Signal für die Steuerung dafür, dass die Nulllage bzw. die Referenzposition erreicht ist und dadurch wieder "erlernt" werden.

Besonders bevorzugt ist das Bistabilventil von einer elektrisch betätigten Feststellbremseinrichtung eines Fahrzeugs umfasst. Dabei ist das wenigstens eine Ventilglied durch Federmittel gegen wenigstens einen Anschlag in eine Position vorgespannt, welche einem der Schaltzustände entspricht. In dieser Stellung können die Federkräfte das wenigstens eine Ventilglied dann nicht mehr verstellen, vielmehr stabilisieren sie dessen Position. Bevorzugt ist der Schaltzustand, bei welchem das wenigstens eine Ventilglied gegen den wenigstens einen Anschlag vorgespannt ist, der Fahrstellung der Feststellbremseinrichtung zugeordnet. Wenn daher diese Fahrstellung durch die Federmittel bzw. den Anschlag stabil gehalten wird, kann ein unbeabsichtigtes, beispielsweise durch Fahrzeugschwingungen ausgelöstes unbeabsichtigtes Verstellen des Bistabilventils in eine Parkstellung, in welcher die Feststellbremse zugespannt ist, vermieden werden. Demgegenüber ist es nicht kritisch, wenn sich das Ventilglied in einer vom Anschlag entfernten und dann durch die Federkräfte gegen den elektromotorischen Antrieb belasteten Schaltstellung des Bistabilventils befindet, solange diese Schaltstellung der Parkstellung der Feststellbremseinrichtung entspricht. Denn im geparkten Zustand eines Fahrzeugs ist eine allenfalls geringe Schwingungsbelastung zu erwarten, von welcher auszugehen ist, dass sie die Schaltstellung des Bistabilventils nicht zu verändern vermag.

Besonders bevorzugt ist das Bistabilventil ein 3/2-Wegeventil mit zwei Schaltzuständen, wobei das Linearelement des Getriebes das Doppelsitzventil derart betätigt, dass beide Schaltzustände in einer einzigen linearen Betätigungsrichtung eingenommen werden. Das Doppelsitzventil beinhaltet beispielsweise ein mit einem ersten Ventilsitz zusammen wirkendes erstes Ventilglied sowie ein mit einem zweiten Ventilsitz zusammen wirkendes zweites Ventilglied, wobei das Linearelement des Getriebes mit steigendem Vorschub in der Betätigungsrichtung zunächst das erste Ventilglied vom ersten Ventilsitz und dann das zweite Ventilglied vom zweiten Ventilsitz abhebt, um zunächst den einen Schaltzustand und dann den anderen Schaltzustand herbeizuführen. Während also das Linearelement in einer Richtung betätigt wird, schaltet das Ventil von dem einen Schaltzustand in den anderen Schaltzustand, bei Umkehrung der Bewegungsrichtung hingegen vom anderen Schaltzustand in den einen Schaltzustand.

Dabei sind die Ventilglieder bevorzugt axial hintereinander und koaxial mit einer Mittelachse des Bistabilventils angeordnet und das erste Ventilglied und das zweite Ventilglied durch Federmittel gegen die Betätigungsrichtung des Linearelements des Getriebes vorgespannt.

Genaueres geht aus der folgenden Beschreibung eines Ausführungsbeispiels hervor.

### Zeichnung

Nachstehend ist ein Ausführungsbeispiel der Erfindung in der Zeichnung dargestellt und in der nachfolgenden Beschreibung näher erläutert. In der Zeichnung zeigt
- Fig.1: ein schematisches Ersatzschaubild eines Bistabilventils als 3/2-Wegeventil gemäß einer bevorzugten Ausführungsform der Erfindung;
- Fig.2: eine Querschnittsansicht des Bistabilventils von Fig.1.

### Beschreibung des Ausführungsbeispiels

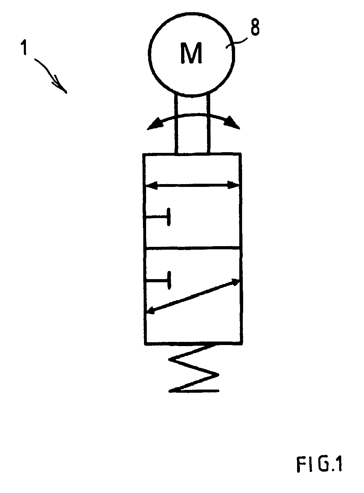

Das in Fig.1 schematisch gezeigte 3/2-Wegeventil ist bevorzugt ein pneumatisches Bistabilventil 1 mit elektrischer Steuerung bzw. Betätigung. Das Bistabilventil 1 ist beispielsweise in ein Feststellbremsmodul einer elektro-pneumatischen Bremsanlage eines Nutzfahrzeugs integriert und steuert dort beispielsweise den Steuereingang eines Relaisventils an. Die Funktionsweise eines solchen Feststellbremsmoduls ist in der eingangs genannten DE 103 36 611 A1 beschrieben, deshalb soll hier nicht weiter darauf eingegangen werden.

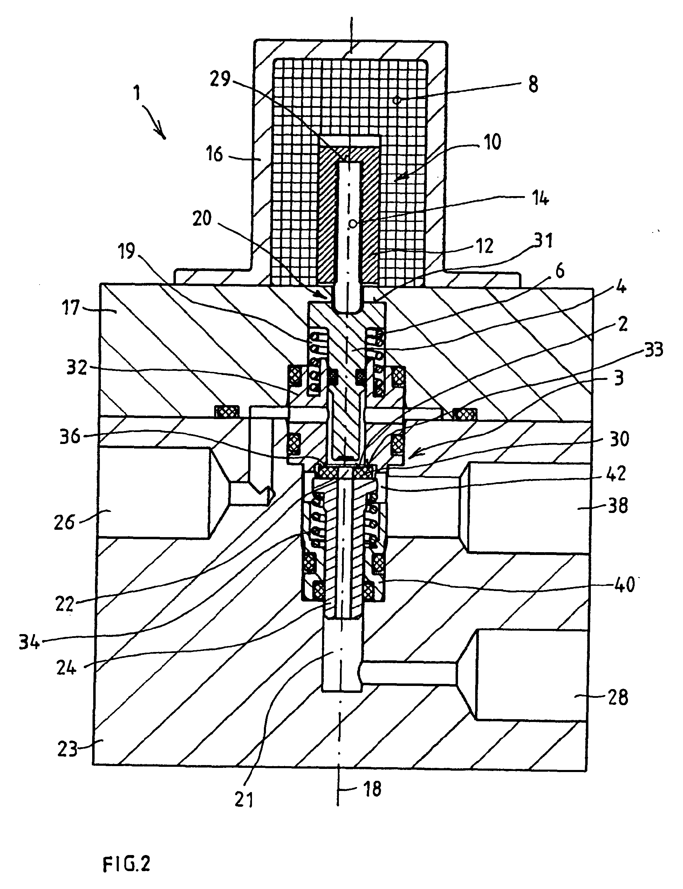

Das 3/2-Wege-Bistabilventil 1 hat eine bistabile Schaltfunktion mit drei Anschlüssen und zwei Schaltzuständen. Gemäß Fig.2 beinhaltet es wenigstens ein mit einem ersten Ventilsitz 2 eines Doppelsitzventils 3 zusammen wirkendes erstes Ventilglied 4, welches in einen vom ersten Ventilsitz 2 abgehobenen Schaltzustand mittels einer ersten Ventilfeder 6 vorgespannt ist.

Die elektrische Betätigung des Bistabilventils 1 umfasst bevorzugt einen Elektromotor 8 mit hier nicht explizit gezeigtem Rotor und Stator, wobei der Rotor ein Drehelement eines bevorzugt selbsthemmenden Getriebes 10 zur Wandelung der Drehbewegung des Rotors in eine Linearbewegung eines Linearelements des Getriebes 10 antreibt und das Linearelement unter anderem mit dem ersten Ventilglied 4 zusammenwirkt, um die Schaltzustände herzustellen.

Das Getriebe ist beispielsweise ein selbsthemmender Mutter-Spindel-Trieb 10, wobei beispielsweise die Mutter 12 vom Rotor des Elektromotors 8 rotatorisch angetrieben wird und die drehfest in einem Gehäuse 16 der Ventilsteuerung geführte Spindel 14 in Wirkverbindung mit dem ersten Ventilglied 4 des Bistabilventils 1 steht. Alternativ könnte natürlich auch die Spindel 14 vom Rotor des Elektromotors 8 drehgetrieben und die dann drehfest gelagerte Mutter 12 kolinear mit einer Mittelachse 18 des Bistabilventils 1 angetrieben werden, um in bevorzugt direktem Kontakt mit dem ersten Ventilglied 4 dieses in bevorzugt axialer Schaltrichtung, d.h. in Richtung der Mittelachse 18 zu betätigen. Alternativ sind selbstverständlich auch andere Getriebe denkbar, um eine Drehbewegung des Rotors in eine Betätigungsbewegung des Ventilglieds 4 zu wandeln, beispielsweise ein Kurvengetriebe oder ein Schnecken-Zahnradgetriebe.

Die Wirkverbindung zwischen der Spindel 14 und dem ersten Ventilglied 4 ist beispielsweise dadurch realisiert, dass das erste Ventilglied 4 an seinem vom ersten Ventilsitz 2 abgewandten Ende eine Ausnehmung 20 aufweist, in welche die Spindel 14 des Getriebes 10 stößelartig eingreift. Die sich einerseits am ersten Ventilglied 4 und andererseits an einer ersten, in einer Sacklochbohrung 19 eines Ventilgehäuseteils 17 gehaltenen Ventilbuchse 32 abstützende erste Ventilfeder 6 spannt dann das erste Ventilglied 4 gegen die Spindel 14 bzw. gegen einen ersten Anschlag 31 vor. Das erste Ventilglied 4 ist in einer zentralen Sacklochbohrung 19 des Ventilgehäuseteils 17 bzw. in der ersten Ventilbuchse 32 linear beweglich geführt. Der erste Anschlag 31 wird dann bevorzugt durch einen Absatz der Sacklochbohrung 19 gebildet.

Wenn folglich der Elektromotor 8 die Mutter 12 des Getriebes 10 in einer Richtung rotatorisch treibt, drückt die dann linear angetriebene Spindel 14 das erste Ventilglied 4 gegen die Wirkung der Ventilfeder 6 vom ersten Anschlag 31 weg gegen den ersten Ventilsitz 2 und verschließt einen in einem zweiten Ventilglied 24 ausgebildeten ersten Strömungsquerschnitt 22, der einen ersten Anschluss 26 des Bistabilventils 1 mit einem zweiten Anschluss 28 verbindet.

Andererseits, wenn der Elektromotor 8 die Mutter 12 des Getriebes 10 in der entgegen gesetzten Richtung rotatorisch antreibt, entlastet die Spindel 14 das erste Ventilglied 4, wodurch dieses durch die Wirkung der Ventilfeder 6 wieder gegen den ersten Anschlag 31 gedrängt wird und vom ersten Ventilsitz 2 abhebt und den im zweiten Ventilglied 24 ausgebildeten ersten Strömungsquerschnitt 22 wieder freigibt, so dass der erste Anschluss 26 des Bistabilventils 1 mit dem zweiten Anschluss 28 in Strömungsverbindung gerät. Dieser Schaltzustand ist in Fig.2 dargestellt.

Der erste Ventilsitz 2 ist bevorzugt an einem scheibenförmigen Prallelement 30 ausgebildet, welches an dem zum ersten Ventilglied 4 weisenden Ende des zweiten Ventilglieds 24 angeordnet ist. Das zweite Ventilglied 24 ist in einer mit der Sacklochbohrung 19 in dem einen Ventilgehäuseteil 17 koaxialen Sacklochbohrung 21 eines weiteren Ventilgehäuseteils 23 aufgenommen und mittels einer zweiten Ventilfeder 34 gegen einen zweiten Ventilsitz 36 des Doppelsitzventils 3 vorgespannt, welcher zugleich einen zweiten Anschlag 33 für das zweite Ventilglied 24 bildet und an der in die Sacklochbohrung 19 eingesetzten ersten Ventilbuchse 32 ausgebildet ist, an welcher sich die erste Ventilfeder 6 abstützt.

Die zweite Ventilfeder 34 stützt sich einerseits am zweiten Ventilglied 24 und andererseits an einer in die Sacklochbohrung 21 eingesetzten zweiten Ventilbuchse 40 ab und spannt das zweite Ventilglied 24 gegen den zweiten Ventilsitz 36 an der ersten Ventilbuchse 32 vor. Weiterhin ist das zweite Ventilglied 24 in der zweiten Ventilbuchse 40 linear beweglich und koaxial mit der Mittelachse 18 geführt.

Falls daher, ausgehend von dem Schaltzustand, in dem das erste Ventilglied 4 bereits gegen den ersten Ventilsitz 2 dichtend gedrängt und dadurch der erste Strömungsquerschnitt 22 verschlossen ist, der Elektromotor 8 die Mutter 12 des Getriebes 10 in der einen Richtung weiter antreibt, verschiebt die dann linear getriebene Spindel 14 das erste Ventilglied 4 zusammen mit dem zweiten Ventilglied 24 gegen die Wirkung der ersten Ventilfeder 6 und der zweiten Ventilfeder 34 in einen weiteren Schaltzustand, in welchem der erste Strömungsquerschnitt 22 verschlossen ist und damit keine Verbindung zwischen dem ersten Anschluss 26 und dem zweiten Anschluss 28 besteht, in welchem aber das zweite Ventilglied 24 vom zweiten Ventilsitz 36 abgehoben ist und einen zweiten Strömungsquerschnitt 42 freigibt, so dass der erste Anschluss 26 in Strömungsverbindung mit einem dritten Anschluss 38 tritt.

Wenn dann ausgehend von diesem Schaltzustand der Elektromotor 8 in Gegenrichtung angetrieben wird, so kontaktiert das zweite Ventilglied 24 wieder den zweiten Ventilsitz 36 und verschließt somit den zweiten Strömungsquerschnitt 42, welcher die Verbindung zwischen ersten Anschluss 26 und dem dritten Anschluss 38 herstellen würde. Diese Bewegung des zweiten Ventilglieds 24 wird von der zweiten Ventilfeder 34 unterstützt. Bei weiterem Antrieb des Elektromotors 8 in Gegenrichtung hebt dann das erste Ventilglied 4 wieder vom ersten Ventilsitz 2 ab und gibt dadurch den ersten Strömungsquerschnitt 22 frei, was zu einer Strömungsverbindung zwischen dem ersten Anschluss 26 und dem zweiten Anschluss 28 führt, wodurch wieder der Schaltzustand gemäß Fig.2 hergestellt ist.

Zusammenfassend ergeben sich bei dem bevorzugten Ausführungsbeispiel die Schaltzustände des Bistabilventils 1 abhängig von der linearen Position des auf das erste Ventilglied wirkenden Endes der Spindel 14 in Richtung der Mittelachse 18, wobei diese Position wiederum von der Drehrichtung und dem Drehwinkel des Elektromotors 8 abhängt.

Weiterhin ist ein einer Nulllage oder Referenzposition zugeordneter Anschlag 29 für die Spindel 14 beispielsweise durch einen Boden der Mutter 12 vorgesehen, gegen welchen die Spindel 14 gefahren werden kann. Ein dadurch bedingter Anstieg des Motormoments bzw. durch die Blockade bildet dann ein Signal für die Steuerung dafür, dass die Nulllage bzw. die Referenzposition des Elektromotors 8 erreicht ist.

In der Position, in welcher sich die Ventilglieder 4, 24 durch die Ventilfedern 6, 34 in gegen die Anschläge 31, 33 vorgespannter und dort stabilisierter Lage befinden und der Elektromotor 8 nicht betätigt wird, liegt der Schaltzustand gemäß Fig.2 vor. In diesem durch die Federkräfte der Ventilfedern 6, 34 stabilisierten Schaltzustand können die Ventilfedern 6, 34 die Ventilglieder 4, 24 dann nicht mehr weiter verstellen. Bevorzugt ist der Schaltzustand des Bistabilventils 1 gemäß Fig.2 der Fahrstellung der Feststellbremseinrichtung zugeordnet. Wenn daher der Schaltzustand gemäß Fig.2 durch die Ventilfedern 6, 34 bzw. die Anschläge 31, 33 stabil gehalten wird, kann ein unbeabsichtigtes, beispielsweise durch Fahrzeugschwingungen ausgelöstes Umschalten des Bistabilventils 1 in die Parkstellung, in welcher die Feststellbremse zugespannt ist, vermieden werden.

Bevorzugt weist der Elektromotor 8 eine mehrsträngige, von einer hier nicht gezeigten elektronischen Steuerung gesteuerte Wicklung auf, wobei sich abhängig von der Ansteuerung der Wicklung durch die elektronische Steuerung Drehrichtung und Drehwinkel des Rotors des Elektromotors 8 in Bezug zum Stator festlegbar sind.

Solche Elektromotoren 8 sind beispielsweise bürstenlose Gleichstrommotoren wie Schrittmotoren oder elektronisch kommutierte Elektromotoren. Weiterhin umfasst der Rotor und/oder der Stator des Elektromotors 8 wenigstens einen Permanentmagneten zur Erzeugung eines Halte- oder Rastmoments im stromlosen Zustand, insbesondere der Rotor den wenigstens einen Permanentmagneten und der Stator die mehrsträngige Wicklung. Insbesondere weist der Permanentmagnet des Rotors abwechselnd einen Nordpol und einen Südpol auf. Ein Elektromotor 8 mit einer solchen auf der Basis eines Permanentmagneten erzeugten Rastmoments ist beispielsweise ein rein permanent erregter Schrittmotor oder ein Hybridmotor, welcher eine Kombination aus einem Reluktanzschrittmotor und einem Permanentschrittmotor ist.

### Bezugszeichenliste

- 1: Bistabilventil
- 2: erster Ventilsitz
- 3: Doppelsitzventil
- 4: erstes Ventilglied
- 6: erste Ventilfeder
- 8: Elektromotor
- 10: Getriebe
- 12: Mutter
- 14: Spindel
- 16: Gehäuse
- 17: Ventilgehäuseteil
- 18: Mittelachse
- 19: Sacklochbohrung
- 20: Ausnehmung
- 21: Sacklochbohrung
- 22: erster Strömungsquerschnitt
- 23: Ventilgehäuseteil
- 24: zweites Ventilglied
- 26: erster Anschluss
- 28: zweiter Anschluss
- 29: Anschlag
- 30: Prallelement
- 31: erster Anschlag
- 32: erste Ventilbuchse
- 33: zweiter Anschlag
- 34: zweite Ventilfeder
- 36: zweiter Ventilsitz
- 38: dritter Anschluss
- 40: zweite Ventilbuchse
- 42: zweiter Strömungsquerschnitt

## Patentansprüche

1. Elektrisch betätigtes Bistabilventil (1) mit einer bistabilen Schaltfunktion mit zwei Schaltzuständen, beinhaltend wenigstens ein mit wenigstens einem Ventilsitz (2, 36) zusammenwirkendes Ventilglied (4, 24), wobei die elektrische Betätigung wenigstens einen Elektromotor (8) mit einem Rotor und einem Stator umfasst, wobei der Rotor ein Drehelement (12) eines Getriebes (10) zur Wandelung der Drehbewegung des Rotors in eine Linearbewegung eines Linearelements (14) des Getriebes (10) treibt und das Linearelement (14) mit dem wenigstens einen Ventilglied (4, 24) zusammenwirkt, um die Schaltzustände herzustellen, **dadurch gekennzeichnet, dass** das Bistabilventil ein Doppelsitzventil (3) umfasst, wobei das Linear-element (14) des Getriebes (10) das Doppelsitzventil (3) derart betätigt, dass beide Schaltzustände in einer einzigen linearen Betätigungsrichtung eingenommen werden.

2. Bistabilventil nach Anspruch 1, **dadurch gekennzeichnet, dass** das Getriebe (10) ein selbsthemmender Mutter-Spindel-Trieb und die Spindel (14) oder die Mutter (12) vom Rotor des Elektromotors (8) getrieben ist und die Mutter (12) oder die Spindel (14) mit dem Ventilglied (4, 24) direkt oder indirekt zusammenwirkt.

3. Bistabilventil nach Anspruch 1 oder 2, **dadurch gekennzeichnet, dass** der Elektromotor (8) eine mehrsträngige, von einer elektronischen Steuerung gesteuerte Wicklung aufweist, wobei sich abhängig von der Ansteuerung der Wicklung durch die elektronische Steuerung Drehrichtung und Drehwinkel des Rotors in Bezug zum Stator des Elektromotors (8) festlegbar sind.

4. Bistabilventil nach einem der vorhergehenden Ansprüche, **dadurch gekennzeichnet, dass** der Rotor und/oder der Stator des Elektromotors (8) wenigstens einen Permanentmagneten zur Erzeugung eines Halte- oder Rastmoments im stromlosen Zustand umfasst.

5. Bistabilventil nach Anspruch 4, **dadurch gekennzeichnet, dass** der Rotor den wenigstens einen Permanentmagneten und der Stator die mehrsträngige Wicklung umfasst.

6. Bistabilventil nach einem der vorhergehenden Ansprüche, **dadurch gekennzeichnet, dass** der Elektromotor (8) einen bürstenlosen Gleichstrommotor wie einen Schrittmotor oder einen elektronisch kommutierten Elektromotor umfasst.

7. Bistabilventil nach einem der vorhergehenden Ansprüche, **dadurch gekennzeichnet, dass** es ein 3/2-Wegeventil (1) mit zwei Schaltzuständen ist.

8. Bistabilventil nach einem der vorhergehenden Ansprüche, **dadurch gekennzeichnet, dass** das wenigstens eine Ventilglied (4, 24) gegen wenigstens einen Anschlag (31,33) in eine Position vorgespannt ist, welche einem der Schaltzustände entspricht.

9. Bistabilventil nach einem der vorhergehenden Ansprüche, **dadurch gekennzeichnet, dass** ein einer Nulllage oder Referenzposition zugeordneter Anschlag (29) für das Drehelement (12) oder das Linearelement (14) des Getriebes (10) vorgesehen ist.

10. Bistabilventil nach einem der vorhergehenden Ansprüche, **dadurch gekennzeichnet, dass** das Doppelsitzventil (3) ein mit einem ersten Ventilsitz (2) zusammen wirkendes erstes Ventilglied (4) sowie ein mit einem zweiten Ventilsitz (36) zusammen wirkendes zweites Ventilglied (24) beinhaltet, wobei das Linearelement (14) des Getriebes (10) mit steigendem Vorschub in der Betätigungsrichtung zunächst das erste Ventilglied (4) vom ersten Ventilsitz (2) und dann das zweite Ventilglied (24) vom zweiten Ventilsitz (36) abhebt, um zunächst den einen Schaltzustand und dann den anderen Schaltzustand herbeizuführen.

11. Bistabilventil nach Anspruch 10, **dadurch gekennzeichnet, dass** das erste Ventilglied (4) und das zweite Ventilglied (24) durch Federmittel (6, 34) gegen die Betätigungsrichtung des Linearelements (14) des Getriebes (10) vorgespannt sind.

12. Bistabilventil nach Anspruch 11, **dadurch gekennzeichnet, dass** das erste Ventilglied (4) durch die Federmittel (6) in eine vom ersten Ventilsitz (2) abgehobene Position und das zweite Ventilglied (24) durch die Federmittel (34) in eine gegen den zweiten Ventilsitz (36) gedrängte Position vorgespannt ist.

13. Elektrisch betätigte Feststellbremseinrichtung eines Fahrzeugs, beinhaltend wenigstens ein Bistabilventil (1) nach wenigstens einem der vorhergehenden Ansprüche.

14. Elektrisch betätigte Feststellbremseinrichtung nach Anspruch 13, **dadurch gekennzeichnet, dass** der Schaltzustand des Bistabilventils (1), in welchem das wenigstens eine Ventilglied (4, 24) sich in einer gegen wenigstens einen Anschlag (31,33) vorgespannten Position befindet, einer Fahrstellung der Feststellbremseinrichtung und dass der weitere Schaltzustand des Bistabilventils einer Parkstellung der Feststellbremseinrichtung zugeordnet ist.

## Claims

1. Electrically operable bistable valve (1) having a bistable switching function with two switching conditions, including at least one valve member (4, 24) interacting with at least one valve seat (2, 36), with the electrical operating means including at least one electric motor (8) provided with a rotor and a stator, with said rotor driving a rotating element (12) of a gearing (10) for converting the rotary movement of said rotor into a linear movement of a linear element (14) of said gearing (10) and with said linear element (14) interacting with said at least one valve member (4, 24) for establishing the switching conditions, **characterised in that** said bistabile valve includes a double-seated valve (3), wherein said linear element (14) of said gearing (10) operates said double-seated valve (3) in such a manner that both switching conditions are reached in a single linear operating direction..

2. Bistable valve according to Claim 1, **characterised in that** said gearing (10) is a self-locking nut-stem screw driving mechanism and said stem screw (14) or said nut (12) is driven by the rotor of said electric motor (8) whilst said nut (12) or said stem screw (14) interacts with said valve member (4, 24) directly or indirectly.

3. Bistable valve according to Claim 1 or 2, **characterised in that** said electric motor (8) comprises a multi-strand winding controlled by an electronic controller, with the provision that the sense or rotation and the angle of rotation of said rotor relative to the stator of said electric motor (8) can be determined as a function of the control of said winding by said electronic controller.

4. Bistable valve according to any of the preceding Claims, **characterised in that** said rotor and/or said stator of said electric motor (8) comprises at least one permanent magnet for the generation of a holding or locking momentum in the de-energized condition.

5. Bistable valve according to Claim 4, **characterised in that** said rotor comprises said at least one permanent magnet whilst said stator comprises said multi-strand winding.

6. Bistable valve according to any of the preceding Claims, **characterised in that** said electric motor (8) comprises a brush-less direct-current motor such as a stepping motor or an electronically commuted electric motor.

7. Bistable valve according to any of the preceding Claims, **characterised in that** it is a 3/2 way valve (1) including two switching conditions.

8. Bistable valve according to any of the preceding Claims, **characterised in that** said at least one valve member (4, 24) is biased against at least one stop dog (31, 33) into a position corresponding to one of said switching conditions.

9. Bistable valve according to any of the preceding Claims, **characterised in that** a stop dog (29) associated with a neutral position or reference position is provided for said rotating element (12) or said linear element (14) of said gearing (10).

10. Bistable valve according to any of the preceding Claims, **characterised in that** said double-seated valve (3) includes a first valve member (4) interacting with a first valve seat (2) as well as a second valve member (24) interacting with a second valve seat (36), with said linear element (14) of said gearing (10) lifting initially said first valve member (4) off said first valve seat (2) and then said second valve member (24) off said second valve seat as the advance along the operating direction increases, so as to achieve initially said one switching condition and then said other switching condition.

11. Bistable valve according to Claim 10, **characterised in that** said first valve member (4) and said second valve member (24) are biased by spring means (6, 34) in opposition to the direction of operation of said linear element (14) of said gearing (10).

12. Bistable valve according to Claim 11, **characterised in that** said first valve member (4) is biased by said spring means (6) into a position lifted off said first valve seat (2) and that said second valve member (24) is biased by said spring means (34) into a position urged against said second valve seat (36).

13. Electrically operable parking brake means in a vehicle, including at least one bistable valve (1) according to at least one of the preceding Claims.

14. Electrically operable parking brake means according to Claim 13, **characterised in that** the switching condition of said bistable valve (1), in which said at least one valve member (4, 24) is in a position biased against at least one stop dog (31, 33), is associated with a driving position of said parking brake means and that said further switching condition of said bistable valve is associated with a parking position of said parking brake means.

## Revendications

1. Vanne (1) bistable, à actionnement électrique et ayant une fonction de commutation bistable à deux états de commutation, comportant au moins un obturateur (4, 24) coopérant avec au moins un siège (2, 36), l'actionnement électrique comprenant au moins un moteur (8) électrique ayant un rotor et un stator, le rotor entraînant un élément (12) tournant d'une transmission (10) pour la transformation du mouvement de rotation du rotor en un mouvement linéaire d'un élément (14) linéaire de la transmission (10) et l'élément (14) linéaire coopérant avec le au moins un obturateur (4, 24) pour produire les états de commutation, **caractérisée en ce que** la vanne bistable comprend une vanne (3) à siège double, l'élément (14) linéaire de la transmission (10) actionnant la vanne (13) à siège double de manière à ce que les deux états de commutation soient pris dans une direction d'actionnement linéaire unique.

2. Vanne bistable suivant la revendication 1, **caractérisée en ce que** la transmission (10) est une transmission broche-écrou autoblocante et la broche (14) ou l'écrou (12) est entraînée par le rotor du moteur (8) électrique et l'écrou (12) ou la broche (14) coopère directement ou indirectement avec l'obturateur (4, 24).

3. Vanne bistable suivant la revendication 1 ou 2, **caractérisée en ce que** le moteur (8) électrique a un enroulement à plusieurs brins, commandé par une commande électronique, le sens de rotation et l'angle de rotation du ressort par rapport au stator du moteur (8) électrique pouvant être fixés en fonction de la commande de l'enroulement par la commande électronique.

4. Vanne bistable suivant l'une des revendications précédentes, **caractérisée en ce que** le rotor et/ou le stator du moteur (8) électrique comprend au moins un aimant permanent de production d'un couple de maintien ou d'encliquetage à l'état sans courant.

5. Vanne bistable suivant la revendication 4, **caractérisée en ce que** le rotor comprend le au moins un aimant permanent et le stator d'enroulement à plusieurs brins.

6. Vanne bistable suivant l'une des revendications précédentes, **caractérisée en ce que** le moteur (8) électrique comprend un moteur à courant continu sans balai, comme un moteur pas à pas ou un moteur électrique à commutation électronique.

7. Vanne bistable suivant l'une des revendications précédentes, **caractérisée en ce que** c'est un distributeur (1) à 3/2 deux voies ayant deux états de commutation.

8. Vanne bistable suivant l'une des revendications précédentes, **caractérisée en ce que** le au moins un obturateur (4, 24) est précontraint sur au moins une butée (31, 33) dans une position qui correspond à l'un des états de commutation.

9. Vanne bistable suivant l'une des revendications précédentes, **caractérisée en ce qu'**il est prévu, pour l'élément (12) tournant ou pour l'élément (14) linéaire de la transmission (10), une butée (29) associée à une position zéro ou à une position de référence.

10. Vanne bistable suivant l'une des revendications précédentes, **caractérisée en ce que** la vanne (3) à siège double comporte un premier obturateur (4) coopérant avec un premier siège (2), ainsi qu'un deuxième obturateur (24) coopérant avec un deuxième siège (36), l'élément (14) linéaire de la transmission (10) soulevant, avec une avance croissante dans le sens d'actionnement, d'abord le premier obturateur (4) du premier siège (2) et ensuite le deuxième obturateur (4) du deuxième siège (36), pour provoquer d'abord l'un des états de commutation et ensuite l'autre état de commutation.

11. Vanne bistable suivant la revendication 10, **caractérisée en ce que** le premier obturateur (4) et le deuxième obturateur (24) sont précontraints par des moyens (6, 34) à ressort dans le sens opposé au sens d'actionnement de l'élément (14) linéaire de la transmission (10).

12. Vanne bistable suivant la revendication 11, **caractérisée en ce que** le premier obturateur (4) est précontraint par les moyens (6) à ressort dans une position soulevée du premier siège (2) et le deuxième obturateur (24) est précontraint par les moyens (34) à ressort dans une position repoussée sur le deuxième siège (36).

13. Dispositif de frein de stationnement à actionnement électrique d'un véhicule, comprenant au moins une vanne (1) bistable suivant au moins l'une des revendications précédentes.

14. Dispositif de frein de stationnement à actionnement électrique suivant la revendication 13, **caractérisé en ce que** l'état de commutation de la vanne (1) bistable, dans lequel le au moins un obturateur (4, 24) se trouve dans une position précontrainte sur au moins une butée (31, 33), est associé à une position en marche du dispositif de frein de stationnement et **en ce que** l'autre état de commutation de la vanne bistable est associé à une position en stationnement du dispositif de frein de stationnement.
